(19) Europäisches Patentamt
European Patent Office
Office européen des brevets

(11) EP 3 340 494 A1

## (12) EUROPEAN PATENT APPLICATION

(43) Date of publication:
27.06.2018 Bulletin 2018/26

(51) Int Cl.:
H04B 10/70 (2013.01)          H04L 9/08 (2006.01)
H04L 29/06 (2006.01)

(21) Application number: 16306755.6

(22) Date of filing: 21.12.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Alcatel Lucent
91620 Nozay (FR)

(72) Inventors:
• SURYAPRAKASH, Vinay
70435 STUTTGART, BW (DE)
• BARACCA, Paolo
70435 STUTTGART, BW (DE)
• MALANCHINI, Ilaria
70435 STUTTGART, BW (DE)

(74) Representative: Mouney, Jérôme
Alcatel-Lucent International
Patent Business
Site Nokia Paris Saclay
Route de Villejust
91620 Nozay (FR)

## (54) NETWORK SECURITY USING QUANTUM ENTANGLEMENT

(57) For a network security using particle entanglement, a network entity is configured to:
receive one entangled particle from a user equipment, said one entangled particle being issued from an entanglement between a quantum particle of the user equipment and a quantum particle of an application once the application is instantiated in the user equipment, receive another one entangled particle from a base station, said another one entangled particle being issued from an entanglement between a quantum particle of the base station and a quantum particle of said application once the application is instantiated in the base station, perform an entanglement of said one entangled particle and said another one entangled particle.

FIG. 2

S1  UE : Application instance → generation of entangled particles
UE → [entangled particle] → NE

S2  BS : Application instance → generation of entangled particles
BS → [entangled particle] → NE

S3  NE : reception of entangled particles from UE and BS

S4  NE : entanglement of received entangled particles

**Description**

FIELD OF THE INVENTION

The present invention generally relates to mobile communication networks and systems. More particularly, the present invention pertains to network security based on quantum entanglement.

BACKGROUND

Future mobile networks are intended for use in wide-ranging sectors of the economy which implies that they have to be able to cater to a wide variety of services. In order to cope with the demands placed by these services, networks are envisioned to be service-centric, which in turn requires the network to not just react to the requests of the service or the changes in the service itself, but also to anticipate what the needs of the service (or upcoming service) could be. While ideas of anticipatory network optimization are extremely promising, these ideas are of limited practical interest if robustness (and safe-guards) against the potential hijacking of network resources by malicious users (users pretending to use services they are not) cannot be guaranteed. This is especially true during the initiation of the connection. The traditional way to ensure security and robustness is through the use of cryptography. However, these methods usually result in a lot of communication overhead.

Over the years, there have been various advances in the field of cryptography. Since the traditional methods of cryptography generate additional communication overheads, in the last couple of decades, the use of quantum cryptography (QC) has gained popularity. Quantum key distribution (QKD) - the best known example of quantum cryptography - is already being used in various networks including those run by the Defense Advanced Research Projects Agency (DARPA), the Tokyo QKD Network, the Los Alamos National Laboratory, etc. QKD protocols can be divided into two main categories: i) prepare and measure protocols; ii) entanglement based protocols. The best known entanglement based protocol is the E91 protocol proposed by Artur Ekert in "Quantum cryptography based on Bell's theorem" in 1991. In 2006, the authors of "From Bell's Theorem to Secure Quantum Key Distribution" introduced a new protocol called the CHSH-protocol (Clauser-Horne-Shimony-Holt protocol) and showed the benefits of QC by demonstrating its security against individual attacks. The aforementioned protocols, however, focus only on preventing eavesdropping during a particular communication. Current solutions are not good enough because the communicating pairs are considered to be on equal (or almost equal) footing. However, in a scenario like cellular networks, the connection between a base station and a user should be protected not just from external eavesdroppers during communications, but it is also imperative that the system (cellular network) is protected from a communication partner who wants to hijack the system for themselves and thus, preventing other users from accessing it. The latter aspect is especially important if the network is service-centric because resources are allocated depending on the service opted for. In such a scenario, a greedy malicious user can claim network resources for themselves at the cost of others by pretending to use a service/application requiring a larger number of network resources.

There is a need to prevent network hijacking and eavesdropping by malicious users with almost no additional communication overhead.

SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for network security using particle entanglement, the method comprising the following steps performed by a network entity:

receiving at least one entangled particle from a user equipment, said at least one entangled particle being issued from an entanglement between a quantum particle of the user equipment and a quantum particle of an application once the application is instantiated in the user equipment,
receiving at least another one entangled particle from a base station, said at least another one entangled particle being issued from an entanglement between a quantum particle of the base station and a quantum particle of said application once the application is instantiated in the base station,
performing an entanglement of said at least one entangled particle and said at least another one entangled particle.

In an embodiment, said at least one entangled particle and said at least another one entangled particle are generated by at least one of the group of techniques consisting of: quantum dots, Bose-Einstein condensates, and one or more atom cavities.

In an embodiment, said application requires online connection.

In an embodiment, the performing of said entanglement results in an entanglement swap, which causes said quantum particle of the application in the user equipment to be entangled with said quantum particle of the application in the base station.

In an embodiment, said at least one entangled particle and said at least another one entangled particle are photons or electrons.

In an embodiment, the application is related to a service delivered by the network entity.

Advantageously, the fundamental principles of quantum mechanics enable a very robust safeguard against network hijacking and eavesdropping. Almost no communication overhead is required as the only overhead is given by the "extra" particles which are part of the entanglement process.

The invention also pertains to a network entity for network security using particle entanglement, the network entity being configured to:

receive at least one entangled particle from a user equipment, said at least one entangled particle being issued from an entanglement between a quantum particle of the user equipment and a quantum particle of an application once the application is instantiated in the user equipment,
receive at least another one entangled particle from a base station, said at least another one entangled particle being issued from an entanglement between a quantum particle of the base station and a quantum particle of said application once the application is instantiated in the base station,
perform an entanglement of said at least one entangled particle and said at least another one entangled particle.

In an embodiment, the network entity is a cloud server.

The invention also pertains to a user equipment for network security using particle entanglement, the user equipment being configured to:

perform entanglement between quantum particles of the user equipment and quantum particles of an application once the application is instantiated in the user equipment, yielding at least one entangled particle,
send said at least one entangled particle to a network entity that performs an entanglement of said at least one entangled particle and at least another one entangled particle received from a base station, said at least another one entangled particle being issued from an entanglement between a quantum particle of the base station and a quantum particle of said application once the application is instantiated in the base station.

The invention also pertains to a computer program capable of being implemented within a network entity, said program comprising instructions which, when the program is executed within said network entity, carry out steps according to the method according to the invention.

BRIEF DESCRIPTION OF THE FIGURES

Some embodiments of the present invention are now described, by way of example only, and with reference to the accompanying drawings. The same reference number represents the same element or the same type of element on all drawings.

FIG. 1 is a schematic block diagram of a communication system according to one embodiment of the invention for network security using quantum entanglement.
FIG. 2 is a flow chart illustrating a method for network security using quantum entanglement according to one embodiment of the invention.

The same reference number represents the same element or the same type of element on all drawings.

DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

Quantum entanglement is a physical phenomenon that occurs when pairs or groups of particles are generated or interact in ways such that the quantum state of each particle cannot be described independently of the others, even when the particles are separated by a large distance - instead, a quantum state must be described for the system as a whole.

Entanglement swapping is a method that enables one to swap the entanglement of two entangled pairs of quantum particles into that of two new pairs by local operations. The newly entangled particles may be spatially separately, without interaction and without pre-shared entanglement between them. To illustrate this, we refer to the four Bell states (or EPR pairs - Einstein-Podolsky-Rosen) as follows:

$$|\phi^{\pm}\rangle = \frac{1}{\sqrt{2}}(|00\rangle \pm |11\rangle), \qquad (1)$$

$$|\psi^{\pm}\rangle = \frac{1}{\sqrt{2}}(|01\rangle \pm |10\rangle).$$

Then, the computational basis states in terms of Bell states can be expressed as:

$$|00\rangle = \frac{1}{\sqrt{2}}(|\phi^{+}\rangle + |\phi^{-}\rangle),$$

$$|11\rangle = \frac{1}{\sqrt{2}}(|\phi^{+}\rangle - |\phi^{-}\rangle),$$

$$|01\rangle = \frac{1}{\sqrt{2}}(|\psi^{+}\rangle + |\psi^{-}\rangle),$$

$$|10\rangle = \frac{1}{\sqrt{2}}(|\psi^{+}\rangle - |\psi^{-}\rangle).$$

Initially, if two parties each own two particles, one in each of the shared two entangled pairs 1-2 and 3-4 in $|\Phi+\rangle$ states, then the quantum state of the two Bell pairs can be rewritten as:

$$|\phi^{+}\rangle_{12} \otimes |\phi^{+}\rangle_{34} = \frac{1}{2}(|\phi^{+}\rangle|\phi^{+}\rangle + |\phi^{-}\rangle|\phi^{-}\rangle + |\psi^{+}\rangle|\psi^{+}\rangle + |\psi^{-}\rangle|\psi^{-}\rangle)_{1324}. \quad (2)$$

If the party who initially owned the particles 1 and 3 makes a measurement in the Bell basis locally, then the system will swap the entanglement pairs from 1-2, 3-4 into 1-3, 2-4. Depending on the measurement result, the resultant state is in one of the four Bell pairs in Eq. (2) with equal probability of one quarter. The particles 2 and 4 would, therefore, be entangled. Similar results can be obtained if the initially shared entangled states are the Bell states other than $|\phi^{+}\rangle$. The most significant feature of entanglement swapping is to enable one to entangle two quantum systems (2 and 4) that do not have direct interaction between them by a Bell basis measurement (on 1 and 3).

In general, in a mobile system, a terminal (here called User Equipment UE) has access to mobile communication services via a mobile network (also called Public Land Mobile Network PLMN). In general, a mobile network comprises a Core Network (CN) accessed via a Radio Access Network (RAN), in which a service in the cell can be provided on several frequency carriers.

Today, most mobile terminals, as smartphones, have applications for specific services and actively encourage the user to use specific applications when that particular service is opened using a more generic application. For example, it suggests using a video streaming services dedicated application when a video is opened using a browser.

A recent scientific result from "Experimental loophole-free violation of a Bell inequality using entangled electron spins separated by 1.3 km", by B. Hensen et al. in 2015 describes a detection of quantum entanglement at a distance of 1.3 km without any loopholes (viz. a loophole-free violation of a Bell inequality) that could explain the phenomenon and was corroborated shortly thereafter according to "Significant-loophole-free test of Bell's theorem with entangled photons", by M. Guistina et al., and "A strong loophole-free test of local realism", by L.K. Shalm et al., in 2015.

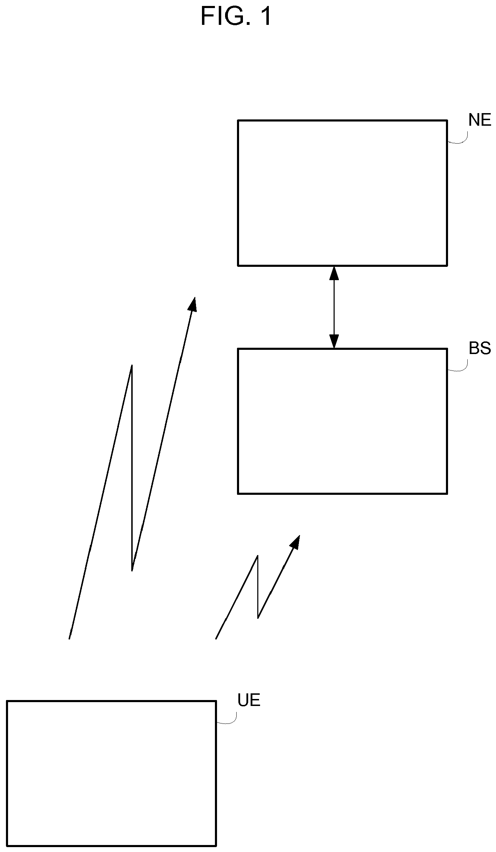

Referring to FIG. 1, a user equipment UE is able to be connected to at least one telecommunication network.

For example, the telecommunication network is a digital cellular radio communication network of the GSM (Global System for Mobile communications) or UMTS (Universal Mobile Telecommunications System) or even CDMA (Code Division Multiple Access) type or even LTE (Long Term Evolution) type or even 5G type.

The user equipment UE can establish a connection with the telecommunication network through a respective radio access network via a radio link with a base station BS. The radio access networks are distributed over a geographical area typically divided into cells that are served by a corresponding base station. Base stations communicate over an air interface with the user equipment, with several base stations being connected to a radio network controller that is connected to one or more core networks.

The user equipment UE is capable of establishing a communication within a telecommunication network, for example with an application server delivering a service associated with an application installed in the user equipment. For instance, the user equipment UE is a mobile telephone, a smartphone, or a tablet, an electronic telecommunication device or object that is personal to the user. The user equipment UE implements at least one application for using a specific service requiring online connectivity.

A network entity NE is for example a server included in the core network of the telecommunication network and is dedicated to the providing of at least one service, said service being usable via applications implemented in user equipment.

The user equipment UE and the base station BS each include an entangled particle generator which is configured to generate single particle and/or multi-particle waveforms using a variety of different techniques and devices such as one or more atom cavities, quantum dots, Bose-Einstein condensates as well as other suitable devices for generating entangled photons or electrons.

An example of an atom cavity capable of generating multiple entangled particles is described in "Step-by-Step Engineered Multiparticle Entanglement" by Arno Rauschenbeutel et al., Science Magazine, Vol. 288, Jun. 16, 2000, incorporated by reference herein.

Examples of techniques for producing polarization-entangled microwaves using intra-band transitions in a pair of quantum dots are described in a publication entitled "Entangled MicroWaves From Quantum Dots" by C. Emary et al., Instituut-LorentZ, Universiteit Leiden, PO. Box 9506, 2300 RA Leiden, The Netherlands, (Feb. 23, 2005); incorporated by reference herein.

Methods to produce entangled states of several particles from Bose-Einstein condensates (BECs) are described in "Many Particle Entanglement With Bose-Einstein Condensates" by A. Sorensen et al., Nature 409, 63 (2001), incorporated by reference herein, using atom atom interactions and/or spin-exchange collisions to create entangled particles in multiphoton waveforms.

Communication within the telecommunication network can essentially be described as the exchange of electrons/photons between different network components. Since the entanglement is carried out at a subatomic level, the entangled particles are just one among the bulk of electrons/photons being exchanged, i.e., they are a part of the electromagnetic fields being transmitted and received (which propagate either in a wireless channel or in an optical fiber).

In order to know which services are requested by a user equipment e.g., via an application, and based on the experimental premise of "Experimental loophole-free violation of a Bell inequality using entangled electron spins separated by 1.3 km", B. Hensen et al., 2015, which is referred to herein as "Hensen et al." and is incorporated by reference herein, a trustworthy method is provided to exchange information between a user equipment and a base station without introducing considerable overhead. Therefore, an entanglement is introduced between the quantum particles (e.g. electrons or photons) of the user equipment and those of an application as soon as the application is opened or triggered.

Then, once the request for the service associated with the application is sent to the serving base station, another (completely independent) entanglement - also using a pair of electrons or photons - is introduced at the base station when it instantiates the application.

Then, at least one of the electrons or photons from both the base station BS and the user equipment UE are forwarded to the network entity NE in the cloud managing said service. The network entity NE subsequently entangles the electrons or photons from the application instantiation of the base station and the application request from the user equipment, and thereby, results in an entanglement between the partner electrons/photons at the base station and the user equipment.

This indirect effect is known as entanglement swapping, which results in the user equipment being entangled with the base station through the entanglement of their respective electrons or photons in the network entity.

The forwarding of the entangled particles from the user equipment UE to the network entity NE or from the base station BS to the network entity NE can be performed using quantum relays or quantum repeaters, as described in publication entitled "Entanglement Routers via Wireless Quantum Network Based on Arbitrary Two Qubit Systems" by N. Metwally et al. in 2014, which is incorporated by reference herein.

Once entangled, the communication between the base station BS and user equipment UE can commence. The communication is stopped as soon as the entanglement is broken. The entanglement can be broken by any attempts to explicitly measure just one of the constituents or by any attempts to replicate the quantum state of one of the constituents.

The security against network hijacking and eavesdropping in this scenario is provided based on the fact that the quantum system has to adhere to the No-communication theorem, Heisenberg's uncertainty principle, and the No-cloning theorem, as explained below:

The no-cloning theorem states that "it is impossible to produce a perfect copy of an unknown quantum state with any nonzero success probability".

The no-communication theorem states that "during measurement of an entangled quantum state, it is not possible for one observer, by making a measurement of a subsystem of the total state, to communicate information to another observer."

Due to Heisenberg's uncertainty principle, any act of measurement - apart from estimating the Von Neumann or Rényi entropy of the entire entangled system - causes the entangled particles to de-cohere.

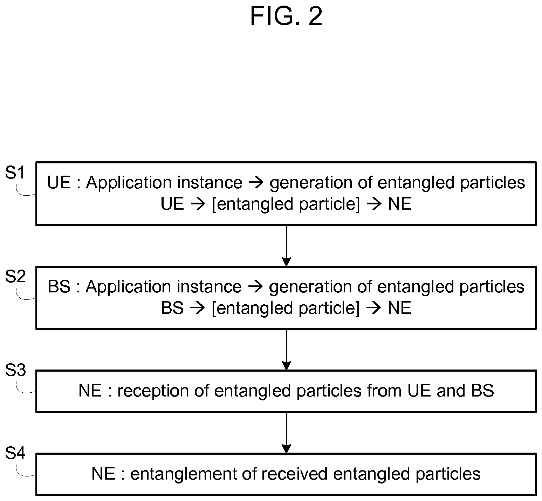

With reference to FIG. 2, a method for network security using quantum entanglement according to one embodiment of the invention comprises steps S1 to S4.

Initially, all entities in the network are in a disentangled state.

In step S1, once the application is triggered in the user equipment UE, the user equipment UE performs an entanglement between the quantum particles (e.g. electrons or photons) of the user equipment and those of the application, resulting in pairs of entangled particles.

It has to be noted that quantum technology can be miniaturized in chip included in small devices like laptops and smartphones as described in the publication "Generation of multiphoton entangled quantum states by means of integrated frequency combs" in the journal Science 11 Mar 2016 Vol. 351, Issue 6278, pp. 1176-1180, which is incorporated by reference herein.

Each entangled particles pairs related to the user equipment UE consist of a first particle and a second particle, the first particle being directed to a detection module, such as a single photon counting module, and the second particle being directed to a transmission module that sends the second particle towards the network entity NE via the telecommunication network in order to initiate services requested by the application. In one embodiment, said second particle is sent towards the network entity NE via a direct communication between the user equipment UE and the network entity NE.

Then a request is sent from the user equipment UE to the serving base station BS for running the application which requires online connection.

In step S2, once the request is received by the base station, the base station instantiates the application and performs an entanglement between the quantum particles (e.g. electrons or photons) of the base station equipment and those of the application.

Also, each entangled particles pairs related to the base station BS consist of a first particle and a second particle, the first particle being directed to a detection module, such as a single photon counting module, and the second particle being directed to a transmission module that sends the second particle towards the network entity NE via the telecommunication network in order to initiate services requested by the application.

In step S3, the network entity NE receives the entangled particle sent from the user equipment UE and the entangled particle sent from the base station BS.

It is noted that the base station and the user equipment do not have to instantiate the application contemporaneously for the entanglements to occur, thus the network entity NE does not receive the entangled particles sent from the user equipment UE and the base station BS at the same time.

From the user equipment and base station point of view, the travel of the entangled particle is just a part of a signal sent by the device to 'fetch' or 'request' a particular piece of information related to the application.

In step S4, the network entity NE performs an entanglement of the entangled particle sent from the user equipment UE with the entangled particle sent from the base station BS. This entanglement is done, for example by making a local measurement in the Bell basis of the received entangled particles, thereby resulting in an entanglement swap between said first entangled particles previously directed to a detection module respectively in the user equipment and the base station.

The entanglement in the network entity can be performed even if the received particles come from continuous wave sources, as described in publication "Entangling independent photons by time measurement" Nature Phys, 3, 692-659 (2007).

Once the entanglement swap is carried out, a verification of the entanglement can be carried out by checking for loop-hole free violations of a Bell inequality, which does not require measurements that could automatically break the entanglement.

Once the entanglement swap is complete, the services requested by the application are delivered to the user equipment. The delivery of services during the entangled state can be monitored by measurements of the entropy of the entire entangled system, i.e. all the base stations and user equipment, from the cloud. This type of measurement is the only one which does not break the entanglement. Depending on the type of entropy that is considered, e.g. Rényi, Von Neumann, or others, the network is considered to be working in a normal state when the entropy measured at the cloud lies within a certain range.

The communication for the delivery of the service is interrupted the moment there is a quantum state mismatch due to a potential hijacking attempt or there is a measurement attempt to ascertain the information being exchanged.

In case of network hijacking: it can be assumed a scenario where a user of the user equipment tries to initiate a "fake" application to obtain more resources (or better service) without regard for other users. In this case, the user has to be able to produce a perfect copy of the quantum state of one's own user equipment, which, in turn, depends on the entire portfolio of applications (both running and idle). This violates the no-cloning theorem.

In case of eavesdropping: it can be assumed that a third party wants to eavesdrop on the communication in progress between the entangled base station and user equipment. In such a case, the eavesdropper has to either know or replicate the quantum states of the base station and the user equipment, which is a violation of both the no-cloning theorem and no-communication theorem. Furthermore, due to a combined consequence of no-cloning theorem, no-communication theorem and Heisenberg's uncertainty principle, the eavesdropper cannot replicate the quantum state of the network entity without breaking the entire combination of entangled states into disentangled states altogether.

Hereinafter is described an illustrative example for the entanglement mechanism.

Once an application is opened on the user equipment, the spins of two electrons triggered by the application are entangled with a photon, as described in "Hensen et al." (e.g., the spin information of the electron is translated to the polarization of the photon - and since the electrons are entangled, so are the photons).

The entangled photon is then transmitted along with other "normal" photons to a base station using lasers (through fiber). Simultaneously, other more conventional information about the service request (such as a data 'fetch' request, or registration request, etc.) can be sent to the base station to trigger an instance of the application requested by the user.

The base station then reflects these photons to the network entity in the cloud using mirrors without any sort of processing, while processing the conventional information using state-of-the-art methods.

Based on the conventional information received and processed, the base station instantiates the application at its end. This instantiation triggers two other electron spins to be entangled with a photon. This photon is then forwarded to the network entity in the cloud using lasers (through fiber) along with more conventional service related information.

At the network entity in the cloud, the photons received from the user equipment and the base station are entangled; thereby, resulting in an entanglement swap, which causes the application instance at the base station to be entangled with the application instance on the user equipment. Once entangled and as long as the entanglement lasts, the service requested for the application can be sent from the cloud to the user equipment using state-of-the-art methods.

The invention described here relates to a method and a network entity for network security using particle entanglement. According to one implementation of the invention, steps of the invention are determined by the instructions of a computer program incorporated into a network entity. The program comprises program instructions which, when said program is loaded and executed within the network entity, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for network security using particle entanglement, comprising the following steps performed by a network entity (NE):

   receiving (S3) at least one entangled particle from a user equipment, said at least one entangled particle being issued from an entanglement between a quantum particle of the user equipment and a quantum particle of an application once the application is instantiated in the user equipment,
   receiving (S3) at least another one entangled particle from a base station, said at least another one entangled particle being issued from an entanglement between a quantum particle of the base station and a quantum particle of said application once the application is instantiated in the base station,
   performing (S4) an entanglement of said at least one entangled particle and said at least another one entangled particle.

2. A method according to claim 1, wherein said at least one entangled particle and said at least another one entangled particle are generated by at least one of the group of techniques consisting of: quantum dots, Bose-Einstein condensates, and one or more atom cavities.

3. A method according to claim 2, wherein said application requires online connection.

4. A method according to any of claims 1 to 3, wherein the performing of said entanglement results in an entanglement swap, which causes said quantum particle of the application in the user equipment to be entangled with said quantum particle of the application in the base station.

5. A method according to any of claims 1 to 4, wherein said at least one entangled particle and said at least another one entangled particle are photons or electrons.

6. A method according to any of claims 1 to 5, wherein the application is related to a service delivered by the network entity.

7. A network entity (NE) for network security using particle entanglement, the network entity being configured to:

receive at least one entangled particle from a user equipment, said at least one entangled particle being issued from an entanglement between a quantum particle of the user equipment and a quantum particle of an application once the application is instantiated in the user equipment,
receive at least another one entangled particle from a base station, said at least another one entangled particle being issued from an entanglement between a quantum particle of the base station and a quantum particle of said application once the application is instantiated in the base station,
perform an entanglement of said at least one entangled particle and said at least another one entangled particle.

8. A network entity (NE) according to claim 7, being a cloud server.

9. A user equipment (UE) for network security using particle entanglement, the user equipment being configured to:

perform entanglement between quantum particles of the user equipment and quantum particles of an application once the application is instantiated in the user equipment, yielding at least one entangled particle,
send said at least one entangled particle to a network entity that performs an entanglement of said at least one entangled particle and at least another one entangled particle received from a base station, said at least another one entangled particle being issued from an entanglement between a quantum particle of the base station and a quantum particle of said application once the application is instantiated in the base station.

10. A base station (BS) for network security using particle entanglement, the base station being configured to:

perform entanglement between quantum particles of the base station and quantum particles of an application once the application is instantiated in the base station, yielding at least one entangled particle,
send said at least one entangled particle to a network entity that performs an entanglement of said at least one entangled particle and at least another one entangled particle received from a user equipment, said at least another one entangled particle being issued from an entanglement between a quantum particle of the user equipment and a quantum particle of said application once the application is instantiated in the user equipment.

FIG. 1

NE

BS

UE

# FIG. 2

S1 | UE : Application instance → generation of entangled particles
UE → [entangled particle] → NE

↓

S2 | BS : Application instance → generation of entangled particles
BS → [entangled particle] → NE

↓

S3 | NE : reception of entangled particles from UE and BS

↓

S4 | NE : entanglement of received entangled particles

Europäisches Patentamt

European Patent Office

Office européen des brevets

# EUROPEAN SEARCH REPORT

Application Number

EP 16 30 6755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAYA NAGY ET AL: "Quantum security in wireless sensor networks", NATURAL COMPUTING, KLUWER ACADEMIC PUBLISHERS, DO, vol. 9, no. 4, 22 April 2010 (2010-04-22), pages 819-830, XP019860352, ISSN: 1572-9796, DOI: 10.1007/S11047-010-9190-4 * page 821, line 18 - page 829, line 30; figures 2,3 * | 1-10 | INV. H04B10/70 H04L9/08 H04L29/06 |
| A | CN 103 491 531 B (USTC UNIV SCIENCE TECH CN; CHINA ELECTRIC POWER RES INST; STATE GRID B) 6 July 2016 (2016-07-06) * figure 1 * | 1-10 | |
| A | US 7 430 295 B1 (PEARSON DAVID SPENCER [US] ET AL) 30 September 2008 (2008-09-30) * column 5, line 48 - column 6, line 52; figure 4 * | 1-10 | |

TECHNICAL FIELDS SEARCHED (IPC)

H04B
H04L

The present search report has been drawn up for all claims

| Place of search | Date of completion of the search | Examiner |
|---|---|---|
| Munich | 23 June 2017 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6755

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | | Publication date | Patent family member(s) | Publication date |
|---|---|---|---|---|
| CN 103491531 | B | 06-07-2016 | NONE | |
| US 7430295 | B1 | 30-09-2008 | NONE | |

EPO FORM P0459

For more details about this annex : see Official Journal of the European Patent Office, No. 12/82

## REFERENCES CITED IN THE DESCRIPTION

**Non-patent literature cited in the description**

- **ARTUR EKERT.** *Quantum cryptography based on Bell's theorem,* 1991
- *From Bell's Theorem to Secure Quantum Key Distribution,* 2006
- **M. GUISTINA.** *Significant-loophole-free test of Bell's theorem with entangled photons*
- **L.K. SHALM et al.** *A strong loophole-free test of local realism,* 2015
- **ARNO RAUSCHENBEUTEL et al.** Step-by-Step Engineered Multiparticle Entanglement. *Science Magazine,* 16 June 2000, vol. 288
- **C. EMARY et al.** Entangled MicroWaves From Quantum Dots. Instituut-LorentZ, Universiteit Leiden, 23 February 2005
- **A. SORENSEN et al.** Many Particle Entanglement With Bose-Einstein Condensates. *Nature,* 2001, vol. 409, 63
- **B. HENSEN et al.** *Experimental loophole-free violation of a Bell inequality using entangled electron spins separated by 1.3 km,* 2015
- **N. METWALLY et al.** *Entanglement Routers via Wireless Quantum Network Based on Arbitrary Two Qubit Systems,* 2014
- Generation of multiphoton entangled quantum states by means of integrated frequency combs. *journal Science,* 11 March 2016, vol. 351 (6278), 1176-1180
- Entangling independent photons by time measurement. *Nature Phys,* 2007, vol. 3, 692-659